# EUROPÄISCHE PATENTANMELDUNG

(11) **EP 3 954 627 A1**
(43) Veröffentlichungstag der Anmeldung: **16.02.2022**
(21) Anmeldenummer: 21182746.4
(22) Anmeldetag: 30.06.2021
(51) Int. Cl.: B65D 53/02

(54) **DICHTELEMENT UND BEHÄLTER**

(30) Priorität: 10.08.2020 DE 202020104620 U
(71) Anmelder: family Gothe GmbH, 50935 Köln (DE)
(72) Erfinder: Goether, Oliver, 50935 Köln (DE)
(74) Vertreter: Schober, Mirko

(57) **Zusammenfassung**

Ein Dichtelement (3) besteht aus einem Material, das Naturkautschuk und Synthesekautschuk umfasst. Dabei beträgt der Anteil an Naturkautschuk höchstens 80 Gew.-% und der Anteil an Synthesekautschuk höchstens 25 Gew.-%.

## Beschreibung

Die Erfindung betrifft ein Dichtelement und einen mit einem solchen Dichtelement ausgestatteten Behälter.

In zahlreichen Anwendungsbereichen werden zum flüssigkeitsdichten Verschließen von Behältern Dichtelemente eingesetzt. Dabei handelt es sich in der Regel um Kunststoffdichtungen, die sich kostengünstig und in großen Mengen herstellen lassen.

Solche Materialien haben allerdings auch Nachteile, denn gerade Kunststoffteile sind in der Regel nicht nachhaltig zu produzieren. Überdies besteht auch das Problem der Lebensmittelechtheit, denn gerade bei längerer Aufbewahrung von Lebensmitteln können sich Weichmacher aus Kunststoffen lösen und in das Lebensmittel gelangen.

Aufgabe der vorliegenden Erfindung ist es daher, ein Dichtelement und einen Behälter anzugeben, mit deren Hilfe sich die geschilderten Nachteile weitgehend vermeiden lassen.

Gelöst wird diese Aufgabe durch ein Dichtelement mit den Merkmalen des Anspruchs 1 sowie einen verschließbaren Behälter mit den Merkmalen des Anspruchs 6. Vorteilhafte Ausführungsformen finden sich in den jeweiligen Unteransprüchen.

Das erfindungsgemäße Dichtelement vermeidet die Verwendung von Kunststoffen, indem eine Mischung aus Naturkautschuk und Synthesekautschuk eingesetzt wird, wobei der Anteil an Naturkautschuk höchstens 80 Gew.-% und der Anteil an Synthesekautschuk höchstens 25 Gew.-% beträgt. Durch diese Mischung wird sichergestellt, dass die Kautschukstruktur sich nicht auflöst und stabil bleibt, insbesondere wenn sie in Verbindung mit Fetten gerät. Es kann also vollständig auf Kunststoffteile verzichtet werden, sodass das erfindungsgemäße Material lebensmittelrecht hergestellt werden kann. Des Weiteren lässt sich das so hergestellte Dichtelement leicht reinigen und wiederverwenden.

Der Mindestanteil von Synthesekautschuk beträgt vorteilhafterweise 10 Gew.-%, äußerst bevorzugt 20 Gew.-%. Der Mindestanteil von Naturkautschuk beträgt bevorzugt wenigstens 40 Gew.-%, äußerst bevorzugt 75 Gew.-%.

Die oben verwendeten Mengenangaben beziehen sich auf die zur Herstellung des Dichtmaterials verwendeten Komponenten vor der Vulkanisierung. Auch können neben dem Naturkautschuk und dem Synthesekautschuk weitere Hilfsstoffe eingesetzt werden, die die Vulkanisierung des Materials unterstützen oder zur Einfärbung des Produktes dienen. Weitere Zuschlagstoffe wie Füllstoffe sind natürlich ebenso denkbar.

In einer bevorzugten Ausführungsform weist das Material zur Herstellung des Dichtelements vor Vulkanisierung zwischen 70 und 75 Gew.-% Naturkautschuk sowie zwischen 20 und 25 Gew.-% Synthesekautschuk sowie zwischen vier und 5 Gew.-% Zuschlagstoffe oder/und Hilfsstoffe auf. Bei einer anderen bevorzugten Ausführungsform weist das Material zur Herstellung des Dichtelements vor der Vulkanisierung zwischen 40 und 50 Gew.-%, bevorzugt 45 Gew.-%, Naturkautschuk sowie zwischen 10 und 20 Gew.-%, bevorzugt 15 Gew.-%, Synthesekautschuk sowie zwischen 4 und 5 Gew.-% Zuschlagstoffe oder/und Hilfsstoffe auf.

Es können zudem Füllstoffe mit einem Anteil von 20 bis 40 Gew.-%, bevorzugt 30 Gew.%, und Hilfsstoffe mit einem Anteil von 1 bis 10 Gew.-%, bevorzugt 4 Gew.% enthalten sein.

Bevorzugt handelt es sich bei dem Synthesekautschuk um einen Nitrilkautschuk. Andere Synthesekautschuke können selbstverständlich alternativ oder ergänzend verwendet werden.

Das oben beschriebene Dichtelement eignet sich hervorragend für die Verwendung zum Abdichten des Verschlusses eines verschließbaren Behälters.

Gerade für Schraubbehälter oder dergleichen kann es von Vorteil sein, wenn das erfindungsgemäße Dichtelement als rundes, insbesondere kreisscheibenförmiges Flächenelement ausgebildet ist. Dies sorgt für einen guten Halt im Deckel eines Behälters und für eine sichere Auflage auf dem zu verschließenden Behälterrand. Auch eine ringförmige Gestaltung des Dichtelements ist genauso möglich, wie andere Geometrien.

Entsprechend weist ein erfindungsgemäßer verschließbarer Behälter einen Behälterrand und einen mit dem Behälterrand zum Verschließen des Behälters zu verbindenden Deckel auf. Es ist dabei egal, ob der Deckel durch Schrauben mit dem Behälter zu verbinden ist oder etwa durch eine Schnappverbindung, Steckverbindung oder dergleichen. Jedenfalls ist erfindungsgemäß zwischen Behälterrand und Deckel das oben näher beschriebene Dichtelement angeordnet.

Bevorzugt ist das Dichtelement in den Deckel eingelegt. Dies kann vorteilhafterweise so geschehen, dass das Dichtelement in dem Deckel auf der Rückseite der Deckeloberseite angeordnet und möglicherweise formschlüssig eingepasst ist, sodass es nicht herausfallen kann. Natürlich kann das Dichtelement auch stoffschlüssig mit dem Deckel verbunden sein.

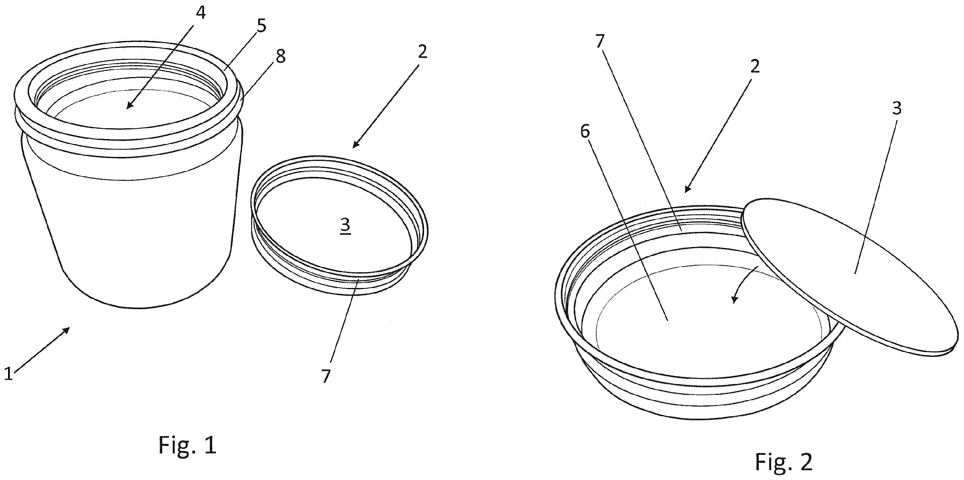

Die Erfindung wird nachfolgend anhand der Figuren 1 und 2 noch näher erläutert.
- Figur 1 -: zeigt einen erfindungsgemäßen Behälter mit davon gelöstem Deckel,
- Figur 2 -: zeigt eine vergrößerte Ansicht des Deckels aus Figur 1, wobei das erfindungsgemäße Dichtelement dabei vom Deckel gelöst ist.

Bei dem in der Figur 1 abgebildeten Behälter 1 kann es sich um einen handelsüblichen Schraubbehälter handeln, der am oberen Rand 8 ein Außengewinde aufweist, auf welches sich ein Deckel 2, welcher an seinem Rand 7 ein Innengewinde aufweist, aufschrauben lässt. Natürlich können Rand 8 und Rand 7 auch Formschluss- oder Kraftschlusselemente wie Rastvorsprünge oder dergleichen aufweisen, um Deckel 2 und Behälter 1 mit-einander möglichst dicht zu verbinden.

Im Deckel 2, der etwas größer in Figur 2 dargestellt ist, ist ein erfindungsgemäßes Dichtelement 3 eingelegt, welches im gezeigten Beispiel die Form einer Kreisscheibe aufweist, es kann natürlich auch jede andere geeignete Form aufweisen, um einen dichtenden Abschluss zwischen dem Deckel 2 und dem Behälter 1 herbeizuführen, um das Innere 4 des Behälters 1 möglichst gut gegenüber der Außenseite abzudichten. Bei der im gezeigten Beispiel gewählten Anordnung liegt eine Flächenseite des Dichtelement 3 im verschlossenen Zustand des erfindungsgemäßen Behälters 1 auf der Oberseite 5 des oberen Randes 8 des Behälters 1 auf. Wird der Deckel 2 auf den Behälter 1 gesetzt, zum Beispiel aufgeschraubt, so wird das Dichtelement 3 zwischen der Innenseite 6 des Deckels 2 und der Ober-seite 5 des oberen Randes 8 des Behälters 1 geklemmt, sodass sich eine Dichtwirkung ergibt.

Das Dichtelement 3 selbst, welches bevorzugt größtenteils aus Naturkautschuk und einem kleineren Teil hinzugegebenem Synthesekautschuk besteht, kann leicht aus dem Deckel 2 entnommen und gereinigt werden. Auch ist es möglich, dass Dichtelement 3 für andere Behältnisse zu verwenden, sofern es die geeignete Größe hierfür aufweist. Auch der Behälter 1 selbst kann aus nachhaltigem Material, wie zum Beispiel Naturkautschuk mit einem bestimmten Anteil an Synthesekautschuk ausgebildet sein, sodass sich in Kombination ein insgesamt nachhaltiges und wiederverwendbares Produkt ergibt.

## Patentansprüche

1. Dichtelement (3), welches aus einem Material besteht, das Naturkautschuk und Synthesekautschuk umfasst, wobei der Anteil an Naturkautschuk höchstens 80 Gew.-% und der Anteil an Synthesekautschuk höchstens 25 Gew.-% beträgt.

2. Dichtelement (3) nach Anspruch 1,
**dadurch gekennzeichnet,**
**dass** der Mindestanteil von Synthesekautschuk 10 Gew.-%, bevorzugt 20 Gew.-%, beträgt.

3. Dichtelement (3) nach Anspruch 1 oder 2,
**dadurch gekennzeichnet,**
**dass** der Mindestanteil von Naturkautschuk 40 Gew.-%, bevorzugt 75 Gew.-%, beträgt.

4. Dichtelement (3) nach Anspruch 1, 2 oder 3,
**dadurch gekennzeichnet,**
**dass** der Synthesekautschuk ein Nitrilkautschuk ist.

5. Dichtelement (3) nach einem der vorigen Ansprüche,
**dadurch gekennzeichnet,**
**dass** es als rundes, insbesondere kreisscheibenförmiges oder ringförmiges, Flächenelement ausgebildet ist.

6. Verschließbarer Behälter (1), aufweisend einen Behälterrand (5, 8) und einen mit dem Behälterrand (5, 8) zum Verschließen des Behälters (2) zu verbindenden Deckel (2), wobei zwischen Behälterrand (5) und Deckel (2) ein Dichtelement (3) nach einem der vorigen Ansprüche angeordnet ist.

7. Verschließbarer Behälter (1) nach Anspruch 6,
**dadurch gekennzeichnet,**
**dass** die Dichtung in den Deckel (2) eingelegt ist.

8. Verwendung eines Dichtelements (3) nach einem der Ansprüche 1 bis 5 zum Abdichten des Verschlusses eines verschließbaren Behälters (1).
